# EUROPEAN PATENT APPLICATION

(11) **EP 4 579 107 A1**
(43) Date of publication of application: **02.07.2025**
(21) Application number: 23857322.4
(22) Date of filing: 21.08.2023
(51) Int. Cl.: F16J 15/34

(54) **MECHANICAL SEAL**

(30) Priority: 23.08.2022 JP 2022132434
(71) Applicant: Eagle Industry Co., Ltd., Minato-ku Tokyo 105-8587 (JP); EagleBurgmann Japan Co., Ltd., Tokyo 105-8587 (JP)
(72) Inventor: NAGO, Norihiro, Tokyo 105-8587 (JP); MATSUMOTO, Osamu, Tokyo 105-8587 (JP); OTAKE, Yuya, Tokyo 105-8587 (JP)
(74) Representative: WSL Patentanwälte Partnerschaft mbB
(86) International application number: PCT/JP2023/030015
(87) International publication number: WO 2024/043211

(57) **Abstract**

There is provided a mechanical seal capable of ensuring slidability between sliding surfaces regardless of the residual amount of liquid between the sliding surfaces. A seal surface 11 of a sliding ring 10 is composed of a base material 12 having an annular shape and attached to a member 5 on a housing 4 side or a member 2A on a rotating shaft 1 side, and a resin material 13 attached to the base material 12. The resin material 13 is configured in an annular shape.

## Description

### {TECHNICAL FIELD}

The present invention relates to a mechanical seal, for example, a mechanical seal that is applied to, for example, a high-speed rotating machine such as a vehicle or an industrial machine, and that partitions a sealed fluid space and a leakage space off from each other.

### {BACKGROUND ART}

As a mechanical seal that prevents leakage of a sealed fluid around a rotating shaft in a rotating machine, for example, a mechanical seal including a pair of sliding rings having an annular shape which rotate relative to each other and of which sliding surfaces slide against each other has been known.

For example, a mechanical seal described in Patent Citation 1 is mounted and used between a housing of a fluid device and a rotating shaft disposed to penetrate through the housing, and a sliding surface of a stationary seal ring fixed to a stationary-side element formed of the housing or the like and a sliding surface of a rotating seal ring that rotates together with a rotating-side element such as the rotating shaft are in sliding contact with each other in a circumferential direction. Liquid lubrication is performed by a sealed fluid entering a gap between the sliding surfaces, and the mechanical seal has the function of reducing friction occurring on the sliding surfaces and preventing leakage of the sealed fluid.

### {CITATION LIST}

### {Patent Literature}

Patent Citation 1: JP 2022-6788 A (Page 4, FIG. 1)

### {SUMMARY OF INVENTION}

### {Technical Problem}

In the mechanical seal as described in Patent Citation 1, the stationary seal ring and the rotating seal ring are made of a hard material such as SiC, and strength or slidability is ensured. In such mechanical seal, a cryogenic fluid may be sealed as the sealed fluid. Since the cryogenic fluid has the characteristic of having a low boiling point, a phenomenon where the cryogenic fluid evaporates between the sliding surfaces and liquid lubrication is not performed is likely to occur. In the mechanical seal as described in Patent Citation 1, when the phenomenon in which liquid lubrication is not performed between the sliding surfaces occurs, abnormal wear occurs, which is a risk.

The present invention has been made in view of such problems, and an object of the present invention is to provide a mechanical seal capable of ensuring slidability between sliding surfaces regardless of the residual amount of liquid between the sliding surfaces.

### {Solution to Problem}

In order to solve the foregoing problems, a mechanical seal according to the present invention is a mechanical seal which is disposed between a housing and a rotating shaft that rotates relative to the housing, comprising: a stationary sliding ring fixed to a housing side; and a rotating sliding ring fixed to a rotating shaft side slide, wherein the stationary sliding ring and the rotating sliding ring are configured to slide each other through a relative rotation and partition a sealed fluid space and a leakage space off from each other, a seal surface of at least one of the stationary sliding ring and the rotating sliding ring is composed of a base material having an annular shape and attached to a member on the housing side or a member on the rotating shaft side, and a resin material attached to the base material, and the resin material is configured in an annular shape. According to the aforesaid feature of the present invention, liquid lubrication can be stably performed between base materials of a pair of the sliding rings, and when the residual amount of liquid between the sliding surfaces is small, slidability between the sliding surfaces can be ensured by the resin material.

It may be preferable that at least a portion of a sliding surface of remaining one of the stationary sliding ring and the rotating sliding ring slides against the resin material and is made of a material having a higher hardness than the resin material. According to this preferable configuration, since the resin material slides against a base material of the other sliding ring, the base material of the other sliding ring and the resin material can be stably slid against each other.

It may be preferable that the one of the stationary sliding ring and the rotating sliding ring is a stationary seal ring, and the remaining one of the stationary sliding ring and the rotating sliding ring is a rotating seal ring. According to this preferable configuration, since the resin material is attached to the stationary seal ring, the action of a centrifugal force on the resin material can be avoided.

It may be preferable that at least a part of a seal surface of the base material is formed to be closer to a leakage space side than the resin material. According to this preferable configuration, wear powder of the resin material is easily supplied to the seal surface of the base material by a sealed fluid attempting to flow from a sealed fluid space side at high pressure toward the leakage space side at low pressure.

### {BRIEF DESCRIPTION OF DRAWINGS}

FIG. 1 is a cross-sectional view illustrating a mechanical seal according to a first embodiment of the present invention.
FIG. 2 is an enlarged view of main portions of FIG. 1.
FIG. 3 is a view of a stationary seal ring when viewed in an axial direction from a rotating seal ring side in the first embodiment.
FIG. 4 is an enlarged cross-sectional view of main portions illustrating a state between sliding surfaces after a break-in operation in the first embodiment.
FIG. 5 is an enlarged cross-sectional view illustrating a state where the mechanical seal is subjected to a main operation in a state where the residual amount of liquid between the sliding surfaces is small in the first embodiment.
FIG. 6 is an enlarged cross-sectional view illustrating main portions of a mechanical seal according to a second embodiment of the present invention.
FIG. 7 is an enlarged cross-sectional view illustrating main portions of a mechanical seal according to a third embodiment of the present invention.
FIG. 8 is an enlarged cross-sectional view illustrating main portions of a mechanical seal according to a fourth embodiment of the present invention.

### {DESCRIPTION OF EMBODIMENTS}

Modes for implementing a mechanical seal according to the present invention will be described below based on embodiments.

### {First embodiment}

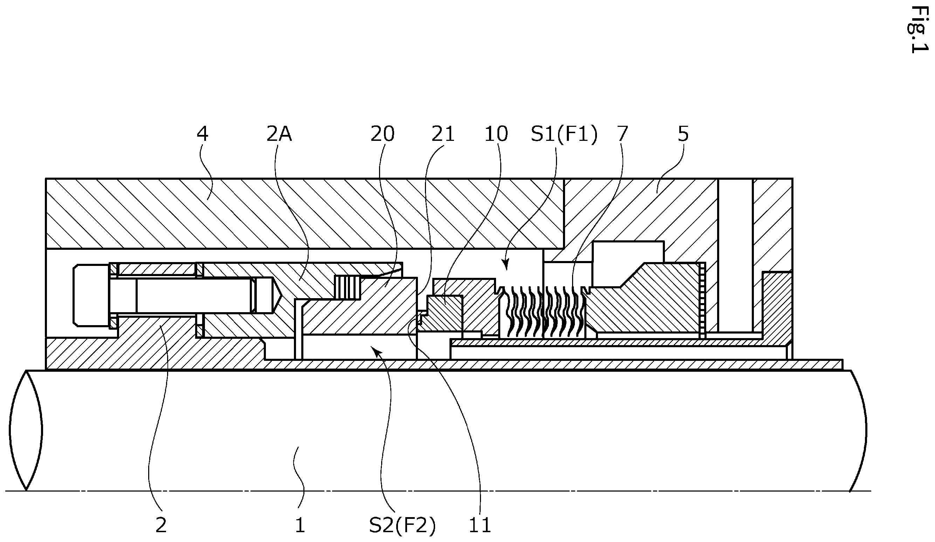

A mechanical seal according to a first embodiment of the present invention will be described with reference to FIGS. 1 to 5. Incidentally, in the present embodiment, a sealed fluid F1 exists in an outer space S1 of the mechanical seal, and a sealed fluid F2 exists in an inner space S2. A radial outer side and a radial inner side of sliding rings constituting the mechanical seal will be described as a sealed fluid side (in other words, a high-pressure side) and a leakage side (in other words, a low-pressure side), respectively.

A mechanical seal illustrated in FIG. 1 is an inside mechanical seal that seals the sealed fluid F1 in the outer space S1 which attempts to leak from the radial outer side toward the radial inner side of sliding surfaces.

The mechanical seal mainly includes a rotating seal ring 20 that is the other sliding ring, and a stationary seal ring 10 that is one sliding ring. The rotating seal ring 20 has an annular shape, and is provided on a holder 2A that is a member on a rotating shaft side, namely, on the rotating shaft 1 via a sleeve 2 to be rotatable together with the rotating shaft 1.

The stationary seal ring 10 has an annular shape, and is provided on a seal cover 5, which is a member on a housing side fixed to a housing 4 of an attached device, to be non-rotatable and movable in an axial direction. In detail, a bellows 7 is attached in a sealed manner between the seal cover 5 and the stationary seal ring 10. The stationary seal ring 10 is biased in the axial direction by the bellows 7.

A sliding surface 11 of the stationary seal ring 10 and a sliding surface 21 of the rotating seal ring 20 slide in close contact with each other. As will be described later, a portion that substantially slides against the sliding surface 21 is a front surface 12d of a base material 12 constituting the sliding surface 11.

Incidentally, in the first embodiment, the member on the rotating shaft side and the member on the housing side have been described as the holder 2A and the seal cover 5, respectively; however, the member on the rotating shaft side may be the sleeve, the rotating shaft itself, or the like, and similarly, the member on the housing side may be the housing itself or the like.

The base material 12 of the stationary seal ring 10 and the rotating seal ring 20 are typically made of SiC (as an example of hard material) or a combination of SiC and carbon (as an example of soft material), but are not limited thereto, and any sliding material can be applied as long as the sliding material is used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (e.g., coating materials), composite materials, and the like can also be applied.

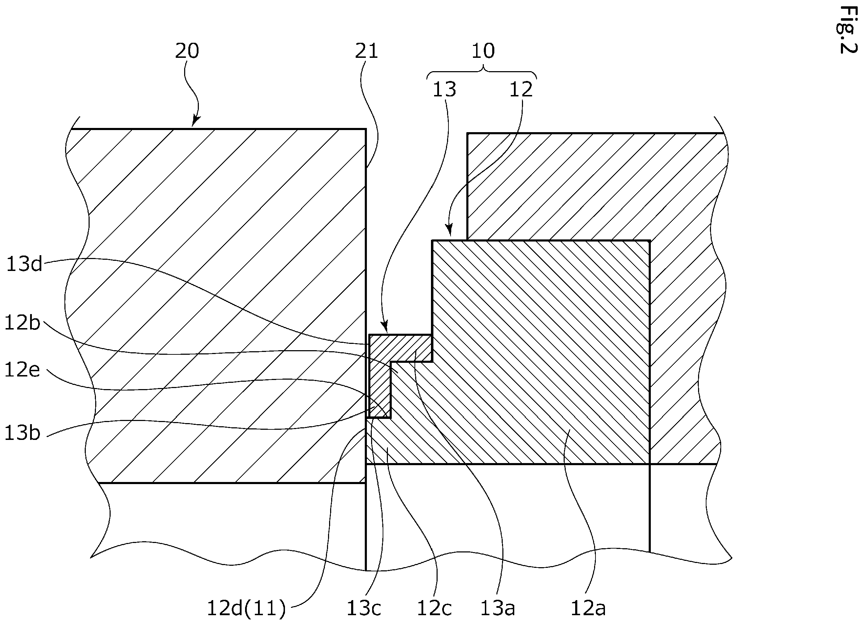

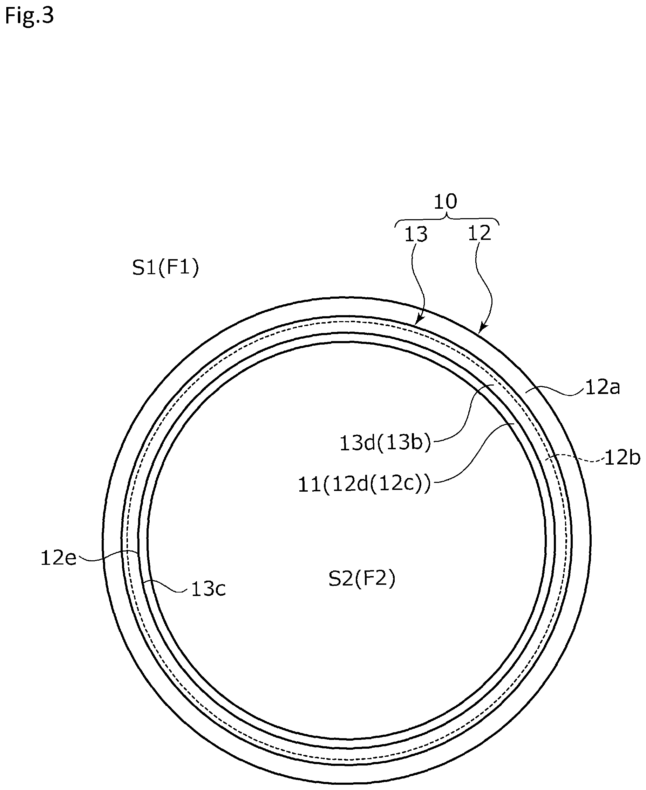

As illustrated in FIGS. 2 and 3, the stationary seal ring 10 includes the base material 12 having an annular shape and a low-friction resin material 13 having an annular shape as a resin material.

The base material 12 includes a base portion 12a, a first protrusion 12b, and a second protrusion 12c that is an annular portion. The base portion 12a has a rectangular cross-section. The first protrusion 12b protrudes from the radial inner side of the base portion 12a toward a rotating seal ring 20 side. The second protrusion 12c protrudes further toward the rotating seal ring 20 side from the radial inner side of the first protrusion 12b.

The low-friction resin material 13 is a member made of PTFE that is softer than the base material 12 and that has low friction properties. The low-friction resin material 13 has a higher thermal expansion coefficient than the base material 12. Incidentally, the low-friction resin material 13 is not limited to being made of PTFE, preferably has low friction properties, and may be made of other resins.

The low-friction resin material 13 includes an axial portion 13a having a cylindrical shape and extending in the axial direction, and a radial portion 13b having an annular shape and extending from the rotating seal ring 20 side of the axial portion 13a, namely, from an end portion on a front surface side of the stationary seal ring 10 toward the radial inner side. Namely, the low-friction resin material 13 has a substantially inverted L shape in a cross-sectional view.

The low-friction resin material 13 is externally fitted to the first protrusion 12b and the second protrusion 12c. Specifically, the axial portion 13a is in contact with an outer peripheral surface of the first protrusion 12b, and the radial portion 13b is in contact with a front surface of the first protrusion 12b. In a room temperature state, a radial inner-side end surface 13c of the radial portion 13b is in close contact with an outer peripheral surface 12e of the second protrusion 12c.

A front surface 13d of the radial portion 13b is substantially flush with the front surface 12d of the second protrusion 12c when viewed in the axial direction, namely, is substantially continuous therewith in a radial direction. However, as will be described later, in detail, when viewed in the radial direction, the front surface 13d of the radial portion 13b is slightly recessed in the axial direction from the front surface 12d of the second protrusion 12c. Namely, the sliding surface 11 of the stationary seal ring 10 is formed by the front surface 12d of the second protrusion 12c, which is an axial end surface of the stationary seal ring 10. For that reason, the front surface 12d of the stationary seal ring 10 functions as the sliding surface 11, and functions as a seal surface that seals a gap between the outer space S1 and the inner space S2.

In addition, in a room temperature state, when viewed in the axial direction, the front surface 13d formed by the low-friction resin material 13 and the front surface 12d formed by the base material 12 are substantially continuous with each other in the radial direction. Namely, there is almost no gap in the radial direction between the low-friction resin material 13 and the base material 12, and there is a slight step in the axial direction.

Incidentally, the low-friction resin material 13 of the present embodiment is disposed on the radial outer side of the first protrusion 12b in a thermally expanded state due to heating, and then is cooled into a room temperature state to contract, thereby coming into close contact with and being externally fitted to the first protrusion 12b.

In addition, FIG. 2 illustrates a shape at room temperature. In addition, in the embodiment of FIG. 2, an axial dimension of the radial portion 13b of the low-friction resin material 13 is slightly smaller than an axial dimension of the second protrusion 12c of the base material 12, and the low-friction resin material 13 is slightly recessed in the axial direction from a sliding surface of the base material 12; however, both dimensions may be the same, or the dimension of the former may be larger than the dimension of the latter. In a case where the dimension of the former is larger than the dimension of the latter, the low-friction resin material 13 wears away immediately and acts as a solid lubricant, and then, after the low-friction resin material 13 wears away, sliding occurs between the base material 12 and the rotating seal ring 20, so that the low-friction resin material 13 basically does not slide and wear away.

In addition, at cryogenic temperature, a gap is formed between a back surface of the axial portion 13a and the front surface 12d (namely, end surface on a sliding surface side) of the base portion 12a of the base material 12.

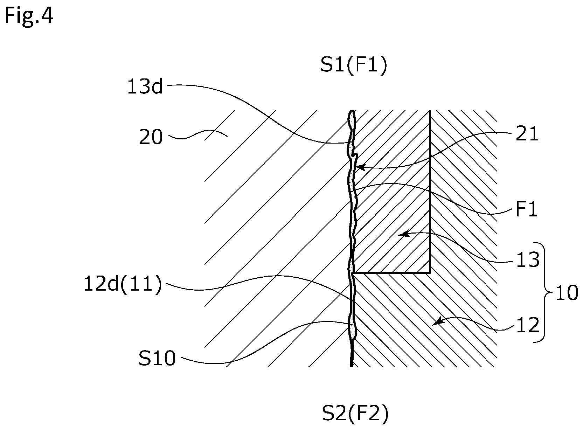

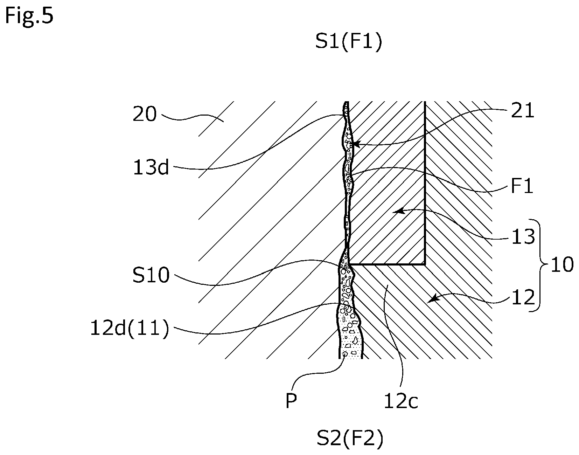

Next, an operation, mainly a change in state between the sliding surfaces 11 and 21, will be described with reference to FIGS. 4 and 5. Incidentally, in FIGS. 4 and 5, for convenience of description, a gap between the sliding surfaces 11 and 21 is illustrated as being larger than the gap actually is.

After the mechanical seal is assembled, a break-in operation is performed. When the break-in operation is performed, as illustrated in FIG. 4, the sliding surfaces 11 (namely, the front surface 12d) and 21 are smoothed, and a gap S10 between the sliding surfaces 11 and 21 is reduced, namely, a good contact state is achieved. After the break-in operation is performed, a main operation of the mechanical seal is performed. Incidentally, FIG. 4 illustrates a shape at room temperature.

Next, a case where the sealed fluid F1 is a room-temperature liquid will be described. During a normal main operation of the mechanical seal in a case where the sealed fluid F1 is a room-temperature liquid, the sliding surfaces 11 and 21 smoothly slide against each other due to liquid lubrication by the sealed fluid F1 that has flowed into the gap S10 mainly from an outer space S1 side (not illustrated). In detail, sliding is stably performed mainly between the front surface 12d of the second protrusion 12c and a portion of the sliding surface 21 facing the front surface 12d.

Next, a case where the sealed fluid F1 is a cryogenic liquid will be described. When the main operation of the mechanical seal is performed, in a case where the sealed fluid F1 is a cryogenic liquid, the sealed fluid F1 evaporates due to an increase in temperature between the sliding surfaces 11 and 21, and the amount of the sealed fluid F1 between the sliding surfaces 11 and 21 is immediately reduced, namely, no liquid lubrication is performed between the sliding surfaces 11 and 21. Here, the cryogenic temperature is 0°C or lower, preferably -100°C or lower.

As illustrated in FIG. 5, in a state where the amount of the sealed fluid F1 between the sliding surfaces 11 and 21 is small, the radial inner side of the sliding surfaces 11 and 21, namely, the front surface 12d of the second protrusion 12c and the portion of the sliding surface 21 facing the front surface 12d wear away. Incidentally, FIG. 5 illustrates a shape at cryogenic temperature.

Meanwhile, slidability on the radial outer side of the sliding surfaces 11 and 21, namely, between the front surface 13d of the low-friction resin material 13 and a portion of the sliding surface 21 facing the front surface 13d is ensured by the low-friction resin material 13 functioning as a solid lubricant.

In addition, the low-friction resin material 13 generates wear powder P due to sliding against the sliding surface 21. The wear powder P enters into the very small gap S10 between the sliding surfaces 11 and 21. In such a manner, slidability between the sliding surfaces 11 and 21 can be improved due to the entry of the wear powder P serving as a solid lubricant into the gap S10.

In addition, since the low-friction resin material 13 wears away more easily since the low-friction resin material 13 has a lower hardness than the base material 12, and the low-friction resin material 13 itself has a higher coefficient of friction than the base material 12, but when the low-friction resin material 13 turns into wear powder (in other words, powder form), the low-friction resin material 13 is reduced in the coefficient of friction, and slides more easily. Here, the resin material that turns into powder has a smaller coefficient of friction than the base material 12. For that reason, the coefficient of friction is reduced and low friction is exhibited in the case of sliding between the sliding surfaces 11 and 21 with wear powder mixed into therebetween compared to the case of direct sliding between the base material 12 and the rotating seal ring 20. Here, the hardness may be any hardness calculated by various hardness measurements (for example, Vickers hardness, Knoop hardness, or the like), and the wear powder is formed by crushing the low-friction resin material 13 that is a solid.

Further, since the low-friction resin material 13 has high non-adhesive properties (in other words, when the low-friction resin material 13 enters a gap between the base material 12 and the rotating seal ring 20, the adhesiveness to the base material 12 and the rotating seal ring 20 is lower than that of other polymer materials such as rubber), the wear powder is in a powder form and functions as a solid lubricant, so that good friction is achieved. Meanwhile, rubber used in O-rings and the like has high adhesive properties, and is less likely to turn into powder, and even when the rubber turns into powder, the rubber has high friction.

In addition, when wear of the low-friction resin material 13 progresses, and the supply of wear powder serving as a solid lubricant into the gap between the sliding surfaces progresses, even if a case where the low-friction resin material 13 is recessed in the axial direction from the front surface 12d of the base material 12, the base material 12 wears away immediately in the case of sliding between the base material 12 and the rotating seal ring 20 at cryogenic temperature, and as a result, the low-friction resin material 13 is scraped off again, and acts as a solid lubricant.

As described above, when the temperature between the sliding surfaces 11 and 21 is low, the gap between the outer space S1 and the inner space S2 can be sealed while stably performing liquid lubrication between the base material 12 of the stationary seal ring 10 and the rotating seal ring 20. Meanwhile, when a phenomenon where liquid lubrication is not performed between the sliding surfaces 11 and 21 due to an increase in temperature between the sliding surfaces 11 and 21 occurs, slidability between the sliding surfaces 11 and 21 can be ensured by the low-friction resin material 13, and the gap between the outer space S1 and the inner space S2 can be sealed.

Further, slidability can be improved by supplying the wear powder P of the low-friction resin material 13 into the gap S10 between the sliding surfaces 11 and 21, as a solid lubricant.

In addition, since the low-friction resin material 13 is attached to the base material 12 having high hardness, the low-friction resin material 13 can be stably supported, and deformation of the low-friction resin material 13 can be suppressed.

In addition, since the base material 12 and the low-friction resin material 13 can be handled as an integrated component during disassembly and assembly at room temperature, an effect of preventing the low-friction resin material 13 from coming off is achieved. In addition, since the low-friction resin material 13 is stably attached to the base material 12 even during in use, sliding characteristics are stable even when sliding occurs on the low-friction resin material 13.

In addition, since there is almost no gap between the base material 12 and the low-friction resin material 13, the wear powder P of the low-friction resin material 13 can be reliably supplied into the gap between the front surface 12d of the second protrusion 12c and the sliding surface 21.

In addition, since the low-friction resin material 13 is shaped to be externally fitted to the base material 12, no gap is formed even when thermal contraction occurs at cryogenic temperature.

In addition, since the low-friction resin material 13 has high toughness, no damage occurs at a contact portion of an external fitting portion with the base material 12.

In addition, the front surface 13d of the low-friction resin material 13 is configured in an annular shape. In other words, since the front surface 13d of the low-friction resin material 13 is formed to be continuous in a circumferential direction on the sliding surface 11, the gap between the sliding surfaces 11 and 21 can be reliably sealed in the circumferential direction.

In addition, the base material of the rotating seal ring 20 is made of a material having a higher hardness than the low-friction resin material 13. Accordingly, since the low-friction resin material 13 slides against the sliding surface 21 of the rotating seal ring 20, wear can be suppressed compared to when the low-friction resin material 13 slides relative to the rotating seal ring made of a soft material. In addition, sliding between the base material of the rotating seal ring 20 and the base material 12 of the stationary seal ring 10 (namely, the front surface 12d of the second protrusion 12c) made of the same material is stable.

In addition, since the low-friction resin material 13 is attached to the base material 12 of the stationary seal ring 10, the action of a centrifugal force on the low-friction resin material 13 can be avoided.

In addition, since the second protrusion 12c of the base material 12 is disposed on the radial inner side that is the low-pressure side of the low-friction resin material 13, the wear powder P of the low-friction resin material 13 is easily supplied into the gap between the front surface 12d of the second protrusion 12c and the sliding surface 21 by the sealed fluid F1 attempting to flow from the outer space S1 toward the inner space S2.

In addition, since the low-friction resin material 13 is externally fitted to the first protrusion 12b by thermal contraction, the assembly of the low-friction resin material 13 to the base material 12 is made easy.

In addition, since a structure in which the low-friction resin material 13 is attached to the base material 12 is employed, the stationary seal ring 10 can be easily configured compared to a case where a low-friction resin coating is formed on the base material.

### {Second embodiment}

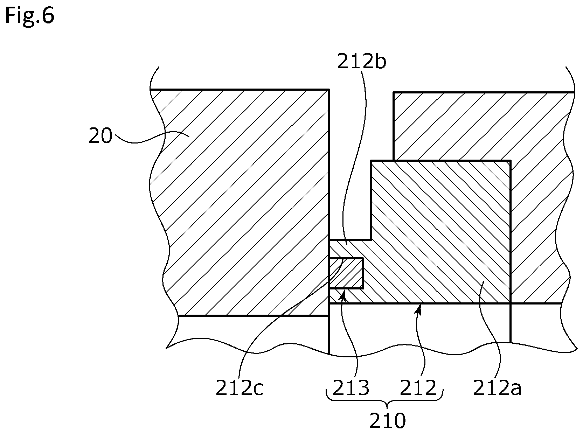

Next, a mechanical seal according to a second embodiment of the present invention will be described with reference to FIG. 6. Incidentally, the description of configurations that are the same as and overlap with the configurations of the above-described embodiment will be omitted. In addition, FIG. 6 illustrates a shape at room temperature.

A base material 212 of a stationary seal ring 210 of the second embodiment has a shape in which a protrusion 212b protrudes from the radial inner side of a base portion 212a toward the rotating seal ring 20 side. A recess 212c that opens to the rotating seal ring 20 is formed in the protrusion 212b.

A low-friction resin material 213 is a ring member having a rectangular cross-section. The low-friction resin material 213 is press-fitted into the recess 212c. In such a manner, since the low-friction resin material 213 is press-fitted into the recess 212c, the base material 212 and the low-friction resin material 213 can be firmly attached to each other.

Incidentally, at cryogenic temperature, gaps are formed between an inner peripheral surface of the recess 212c and an outer peripheral surface of the low-friction resin material 213, and between a bottom surface of the recess 212c and a back surface of the low-friction resin material 213.

Incidentally, in the second embodiment, a mode in which the low-friction resin material 213 is attached to the base material 212 of the stationary seal ring 210 has been provided as an example; however, the present invention is not limited thereto, and a protrusion and a recess may be formed on the rotating seal ring, and the low-friction resin material may be attached to the recess of the rotating seal ring. In this case, since an annular portion of the protrusion is disposed on the radial outer side of the low-friction resin material, even when the low-friction resin material is attached to the rotating seal ring side, the low-friction resin material can be made less likely to be affected by a centrifugal force.

### {Third embodiment}

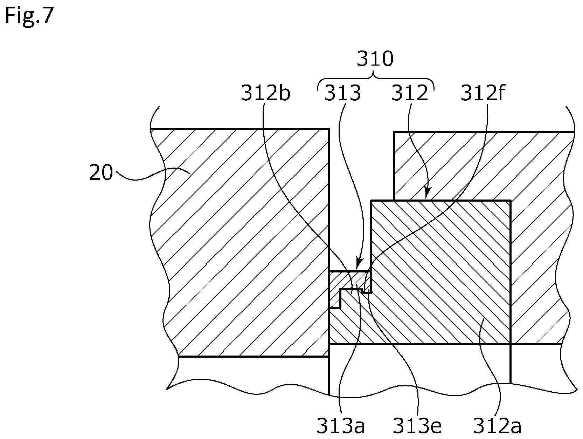

Next, a mechanical seal according to a third embodiment of the present invention will be described with reference to FIG. 7. Incidentally, the description of configurations that are the same as and overlap with the configurations of the first embodiment will be omitted. In addition, FIG. 7 illustrates a shape at room temperature.

In a base material 312 of a stationary seal ring 310 of the third embodiment, an annular recess 312f that opens to the radial outer side is formed between a first protrusion 312b and a base portion 312a.

In a low-friction resin material 313, a projection portion 313e having an annular shape and protruding toward the radial inner side is provided at an end portion on an opposite side of an axial portion 313a from the rotating seal ring 20. The projection portion 313e is fitted into the annular recess 312f.

Incidentally, at cryogenic temperature, a gap is formed between a back surface of the annular recess 321f and an axial end surface on a sliding surface side of the projection portion 313e.

In such a manner, since the projection portion 313e is clutch-fixed to the annular recess 312f, the low-friction resin material 313 is restricted from moving in the axial direction with respect to the base material 312, and is firmly fixed to the base material 312.

### {Fourth embodiment}

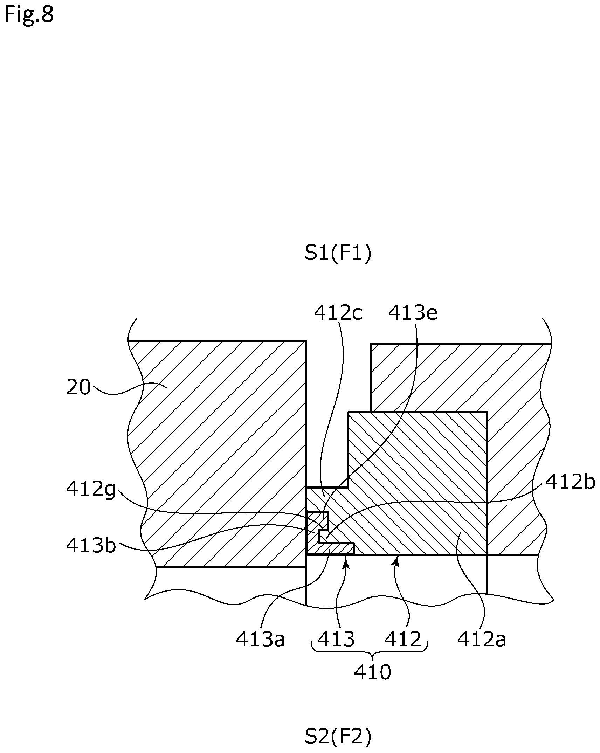

Next, a mechanical seal according to a fourth embodiment of the present invention will be described with reference to FIG. 8. Incidentally, the description of configurations that are the same as and overlap with the configurations of the third embodiment will be omitted. In addition, FIG. 8 illustrates a shape at room temperature.

In the mechanical seal of the fourth embodiment, the sealed fluid F1 exists in the outer space S1, and the sealed fluid F2 exists in the inner space S2.

A base material 412 of a stationary seal ring 410 of the fourth embodiment includes a first protrusion 412b and a second protrusion 412c. The first protrusion 412b protrudes from the radial inner side of a base portion 412a toward the rotating seal ring 20 side. The second protrusion 412c protrudes further toward the rotating seal ring 20 side from the radial outer side of the first protrusion 412b.

In addition, an annular recess 412g that opens to the rotating seal ring 20 side is formed between the first protrusion 412b and the second protrusion 412c.

A low-friction resin material 413 includes an axial portion 413a, a radial portion 413b, and a projection portion 413e. The axial portion 413a is disposed along an inner peripheral surface of the first protrusion 412b. The radial portion 413b is disposed along a front surface of the first protrusion 412b.

The projection portion 413e extends from a radial outer end of the radial portion 413b toward a side opposite to the rotating seal ring 20, and is clutch-fixed to the annular recess 412g.

According to this configuration, since the projection portion 413e is clutch-fixed to the annular recess 412g, the low-friction resin material 413 is restricted from moving in the radial direction with respect to the base material 412, and is firmly fixed to the base material 412.

In addition, since the low-friction resin material 413 has high toughness, no damage occurs at a clutch portion that comes into contact with the base material 412.

In addition, in the fourth embodiment, since the low-friction resin material 413 is disposed on the low-pressure side, deformation of the low-friction resin material 413 due to the sealed fluid F1 on the high-pressure side can be suppressed.

In addition, at cryogenic temperature, gaps are formed between an inner peripheral surface of the annular recess 412g and an outer peripheral surface of the projection portion 413e, between a bottom surface of the annular recess 412g and a back surface of the projection portion 413e, between the inner peripheral surface of the first protrusion 412b and an outer peripheral surface of the axial portion 413a, and between an axial end surface on a sliding surface side of the first protrusion 412b and a back surface of the axial portion 413a.

The embodiments of the present invention have been described above with reference to the drawings; however, the specific configurations are not limited to the embodiments, and changes or additions that are made without departing from the scope of the present invention are included in the present invention.

For example, in the first to fourth embodiments, the mode in which the low-friction resin material has an annular shape has been provided as an example; however, a plurality of the low-friction resin materials may be disposed in the circumferential direction of the sliding surface.

In addition, the rotating seal ring may be made of a base material different from the base material of the stationary seal ring, or may be made of the same material as the base material of the stationary seal ring. Incidentally, it is preferable that the rotating seal ring is made of a material harder than the low-friction resin material.

In addition, in the first to fourth embodiments, the mode in which the low-friction resin material is attached to the base material of the stationary seal ring has been provided as an example; however, the low-friction resin material may be attached to the base material of the rotating seal ring, or the low-friction resin materials may be attached to both seal rings. Incidentally, it is preferable that the low-friction resin material is provided only on one of the sliding rings.

In addition, in the first to fourth embodiments, the mode in which the low-friction resin material is fixed to the base material by thermal contraction, press-fitting, and clutch-fixing has been provided as an example; however, welding, bonding, or the like may be used, and the fixing method may be freely selected.

In addition, in the first to fourth embodiments, the mode in which the sealed fluid F1 is at a higher pressure than the sealed fluid F2 has been provided as an example; however, the sealed fluid F1 may be at a lower pressure than the sealed fluid F2, or may be at the same pressure as the sealed fluid F2.

In addition, the sealed fluids F1 and F2 may be any of a gas, a liquid, and a mixture of gas and liquid. In addition, the sealed fluids F1 and F2 are not limited to cryogenic fluids, and may be room-temperature or high-temperature fluids.

In addition, in the first to fourth embodiments, the mode in which the liquid evaporates due to an increase in temperature between the sliding surfaces, and the amount of the liquid remaining between the sliding surfaces is reduced has been described as an example; however, the present invention can also be applied to a case where the amount of the liquid remaining between the sliding surfaces is reduced due to the structure of the mechanical seal or the usage environment.

In addition, in the first to fourth embodiments, an inside mechanical seal has been described as an example; however, the present invention is not limited thereto, and may be applied to an outside mechanical seal.

In addition, in the first to fourth embodiments, the mode in which the seal surface is composed of a base material and a resin material has been provided as an example; however, the seal surface may include at least a base material and a resin material, and for example, may be composed of a base material, a resin material, and a different member disposed thereoutside.

### {REFERENCE SIGNS LIST}

- 1: Rotating shaft
- 2A: Holder (member on rotating shaft side)
- 4: Housing
- 5: Seal cover (member on housing side)
- 10: Stationary seal ring (one of sliding rings)
- 11: Sliding surface (seal surface)
- 12: Base material
- 12d: Front surface (sliding surface)
- 13: Low-friction resin material (resin material)
- 20: Rotating seal ring (remaining one of sliding rings)
- 21: Sliding surface
- 210: Stationary seal ring (one of sliding rings)
- 213: Low-friction resin material (resin material)
- 310: Stationary seal ring (one of sliding rings)
- 313: Low-friction resin material
- 410: Stationary seal ring (one of sliding rings)
- 412: Base material
- 413: Low-friction resin material
- F1, F2: Sealed fluid
- P: Wear powder
- S1: Outer space (sealed fluid side)
- S2: Inner space (leakage side)
- S10: Gap

## Claims

1. A mechanical seal which is disposed between a housing and a rotating shaft that rotates relative to the housing, comprising:
a stationary sliding ring fixed to a housing side; and
a rotating sliding ring fixed to a rotating shaft side slide,
wherein the stationary sliding ring and the rotating sliding ring are configured to slide each other through a relative rotation and partition a sealed fluid space and a leakage space off from each other,
a seal surface of at least one of the stationary sliding ring and the rotating sliding ring is composed of a base material having an annular shape and attached to a member on the housing side or a member on the rotating shaft side, and a resin material attached to the base material, and
the resin material is configured in an annular shape.

2. The mechanical seal according to claim 1,
wherein at least a portion of a sliding surface of remaining one of the stationary sliding ring and the rotating sliding ring slides against the resin material and is made of a material having a higher hardness than the resin material.

3. The mechanical seal according to claim 1,
wherein the one of the stationary sliding ring and the rotating sliding ring is a stationary seal ring, and the remaining one of the stationary sliding ring and the rotating sliding ring is a rotating seal ring.

4. The mechanical seal according to any one of claims 1 to 3,
wherein at least a part of a seal surface of the base material is formed to be closer to a leakage space side than the resin material.
